# EUROPÄISCHE PATENTSCHRIFT

(11) **EP 0 384 933 B1**
(45) Veröffentlichungstag und Bekanntmachung des Hinweises auf die Patenterteilung: **23.06.1993**
(21) Anmeldenummer: 89103685.7
(22) Anmeldetag: 02.03.1989
(51) Int. Cl.: H01S 3/032

(54) **Gaslaser und Herstellungsverfahren**
Gas laser and method of producing same
Laser à gaz et procédé de fabrication

(43) Veröffentlichungstag der Anmeldung: 05.09.1990
(73) Patentinhaber: SIEMENS AKTIENGESELLSCHAFT, 80333 München (DE)
(72) Erfinder: Welsch, Wolfgang, Dr.-Ing., D-8011 Baldham (DE)

(56) Entgegenhaltungen:
- EP-A- 0 262 352
- DE-A- 2 506 842
- FR-A- 2 043 169
- FR-A- 2 068 011
- FR-A- 2 450 516

## Beschreibung

Die vorliegende Erfindung betrifft einen Gaslaser nach dem Oberbegriff des Patentanspruchs 1.

Ein derartiger Gaslaser ist aus der EP-A-0 262 352 bekannt. Dort wird vorgeschlagen, die einzelnen Teile des Lasers mittels Glaslot miteinander zu verbinden. Aus der US-PS 3,988,698 ist ein Verfahren bekannt, bei dem die einzelnen Teile eines Gaslasers auf zumindest einen Dorn aufgefädelt werden und dadurch in ihrer gegenseitigen Lage zentriert werden, bis sie beispielsweise mittels Schweißen miteinander verbunden sind.

Bei Lasern mit relativ langen Kapillaren, bei denen die Kapillare durch eine zusätzliche Stütze gegen die Gehäusewand in radialer Richtung abgestützt ist, hat sich herausgestellt, daß durch die in der Regel federnd ausgebildete Stütze Kräfte auf die Kapillare wirken können, die nicht vollständig symmetrisch sind und daß dadurch die Kapillare nach dem Zusammenbau dejustiert wird und sich eine verringerte Laserleistung ergibt.

Die Aufgabe, die der vorliegenden Erfindung zugrundeliegt, besteht in der Erhöhung der Laserleistung von Lasern der eingangs beschriebenen Art und in der Verbesserung der Lagejustierung der Kapillare im Laser.

Diese Aufgabe wird durch die kennzeichnenden Merkmale des Patentanspruchs 1 gelöst.

Die Lötverbindung zwischen der Stütze und der Kapillare gleicht selbst geringe Toleranzen der gegenseitigen Lage von Stütze und Kapillare aus, es entsteht beim Einlöten ein spannungsfreier Aufbau, die Kapillare kann nicht nachträglich aus ihrer Lage gedrückt werden.

Für die Halterung der Stütze im Gehäuserohr kann eine der bekannten Lösungen eingesetzt werden. Beispielsweise können fingerartige Federn vorgesehen sein, die gegen die Gehäusewand drücken, oder es kann eine Metallfeder durch ein Einschrumpfen des Gehäuserohres in ihrer Lage fixiert sein.

Beim Übergang zum Gehäuserohr braucht die Stütze nicht federnd ausgebildet zu sein, insbesondere wenn die Temperaturkoeffizienten der Stütze und des Gehäuserohres aneinander angepaßt sind. Vorteilhaft ist dagegen die Ausbildung der Stütze aus federndem Material, wenn diese Anpassung der Temperaturkoeffizienten nicht gewünscht oder möglich ist. Eine vorteilhafte Ausführungsform der Stütze ist rotationssymmetrisch ausgebildet und weist federnde Lamellen auf, welche gegen das Gehäuserohr drücken.

Ein erfindungsgemäßer Gaslaser wird vorteilhaft in einem Verfahren hergestellt, in welchem alle Teile des Lasers einschließlich von Glaslotringen zur Bildung der vorgesehenen Lötstellen mittels zumindest eines Dornes in die gewünschte gegenseitige Lage gebracht und in einem Arbeitsgang miteinander verlötet werden und indem dabei die Stütze durch das Gehäuserohr in seiner endgültigen Lage gehalten wird. Bei dieser Ausführungsform des Verfahrens kann das Gehäuserohr aus verschiedenen Werkstoffen, vorzugsweise aus Glas oder Keramik bestehen. Ebenso ist ein Verfahren vorteilhaft, bei dem für die Verlötung der Stütze mit der Kapillare ein Glaslotring vorgesehen wird, indem die übrigen Teile mit einer der bekannten Methoden miteinander verbunden werden und indem die Stütze unabhängig davon mittels einer Lichtlötung mit der Kapillare verlötet wird. Eine Lichtlötung bedeutet hierbei, daß Licht durch das Gehäuse hindurch eingestrahlt wird, welches von der Lötstelle, nicht aber vom Gehäuse in hohem Maße absorbiert wird, so daß das Lot an der Stütze schmilzt und die Lötung herstellt, ohne daß die Kapillare oder das Gehäuse erweichen oder schmelzen. Die Lichtlötung wird dabei vorteilhaft mittels eines Lasers durchgeführt. Zum Verlöten der Stütze mit der Kapillare wird dabei vorteilhaft ein Lot verwendet, welches die zur Lötung vorgesehene Lichtstrahlung stärker absorbiert als das Material des Gehäuserohres. Das Material der Kapillare kann bei einer Laserlötung beliebig gewählt werden, sofern der Laserstrahl präzise auf den Lotring gerichtet wird und dadurch eine zu große Aufheizung der Kapillare vermieden wird. Sofern eine entsprechend präzise Führung des Laserstrahles nicht gewünscht wird, ist die Auswahl eines Materials für die Kapillare vorteilhaft, welches die verwendete Laserstrahlung nicht oder nur in geringem Maße absorbiert.

Die beiden beanspruchten Verfahren ermöglichen außerdem, daß man ohne Drehen der Röhre auskommt. Die Erwärmung im Ofen erfordert einen relativ großen Zeitaufwand von beispielsweise ein bis zwei Stunden, besitzt aber andererseits den Vorteil, daß gleichzeitig eine ganze Reihe von Röhren verlötet werden kann. Die Lichtlötung und insbesondere die Laserlötung benötigen nur einen geringen Zeitaufwand. Die Lichtquelle kann hierbei ohne besondere Probleme um das zu verlötende Objekt herumgeschwenkt werden, eine Drehung des Objektes ist nicht erforderlich.

Die Anwendung der bekannten Flammenlötung, bei der die Wärme nicht unmittelbar an die innenliegende Lötstelle transportiert werden kann, verbietet sich bei dem erfindungsgemäßen Verfahren, da die Lötung nach dem Zusammenbau der Röhre erfolgen muß, also nach dem Einbau der üblicherweise aus Aluminium bestehenden Kathode, wobei die nachträgliche Erwärmung zur Überhitzung und zur Zerstörung der üblicherweise aus Aluminium bestehenden Kathode führt, bevor das Glaslot an der Kapillare zum Schmelzen kommt. Auch eine HF-Lötung führt hier bei den üblichen Dimensionierungen der Röhren zu einer Überhitzung und Zerstörung der Kathoden.

Die beanspruchten Verfahren ermöglichen eine besonders genaue Justierung der Kapillare, da die Ausrichtung während des Lötprozesses bestehen bleibt und nach dem Erkalten des Lotflusses die Kräfteverteilung über die Lotstelle zur Feder gleichmäßig ist und nicht mehr verändert wird.

Die Erfindung wird nun anhand von drei Figuren naher erläutert. Sie ist nicht auf die in den Figuren gezeigten Beispiele beschränkt.
- Fig. 1: zeigt einen erfindungsgemäßen Laser vor dem Verlöten der Stütze mit der Kapillare in geschnittener Ansicht.
- Die Figuren 2 und 3: zeigen zwei verschiedene Ausführungsformen von Stützen für die Kapillare in geschnittener und gebrochener Ansicht.

Ein Gehäuserohr 1 ist mit Endstücken 3 und 4 über Lotverbindungen 5 vakuumdicht verbunden. Die Endstücke 3 und 4 sind als Metallkappen ausgebildet. Sie können auch in an sich bekannter Weise aus Sinterglas hergestellt sein, wie beispielsweise in der EP-A-0 262 352 beschrieben. Mit den Endstücken sind Spiegelhalterungen 7 und 14 vakuumdicht verbunden, welche Spiegel 8 tragen. Die Spiegelhalterung 7 dient gleichzeitig als Anode. Ihr gegenüber ist eine Kathode 13 im Gehäuserohr 1 angeordnet.

Eine Kapillare 2 weist einen aufgeweiteten Endbereich 20 auf. Dieser Endbereich 20 ist über eine Lötverbindung 6 mit dem Gehäuserohr 1 mechanisch fest verbunden. Die Kapillare 2 und die Bohrungen 21 in den Spiegelhalterungen 7, 14 sind exakt koaxial zueinander ausgerichtet. Eine Stütze 9 für die Kapillare 2 ist etwa in der Mitte der Kapillare 2 angeordnet, läßt aber zu der Kapillare 2 noch einen Zwischenraum 22 frei. Ein Lotring 12, vorzugsweise aus Glaslot, ist an die Stütze 9 angrenzend angeordnet. Zur Fertigstellung der Laserröhre wird Licht in Pfeilrichtung L eingestrahlt, welches vom Lotring 12 absorbiert wird, durch das Gehäuserohr aber ohne nennenswerte Absorption hindurchgeht. Als Lichtquelle für den Lichtstrahl L eignet sich ein Laser mit geeigneter Wellenlänge. Als Lotring 12 eignet sich insbesondere ein Glaslot, welches im Bereich der Wellenlänge des eingestrahlten Lichtes erheblich stärker absorbiert, als das Gehäuserohr. Hierzu kann beispielsweise dem Glaslot ein entsprechend absorbierender Stoff zugesetzt werden. Unter der Wirkung des Lichtstrahls L verschmilzt der Lotring 12 mit der Kapillare 2 und der Stütze 9, ohne daß mechanische Spannungen in der Kapillare 2 entstehen. Die stets vorhandenen Unsymmetrien, die beispielsweise durch die innerhalb von zulässigen Toleranzen unterschiedlichen Abmessungen der Federstreifen 11 hervorgerufen werden, wirken sich nur auf die Lage der Stütze 9 und damit auf die Größe des Freiraumes 22 aus. Sie werden durch das einschmelzende Lot vollständig ausgeglichen.

Die Stütze 9 setzt sich im beschriebenen Beispiel aus einem Ring 10 und Federstreifen 11 zusammen, wobei zumindest drei Federstreifen 11 vorteilhaft sind. Der Ring 10 kann aus Metall oder Keramik bestehen.

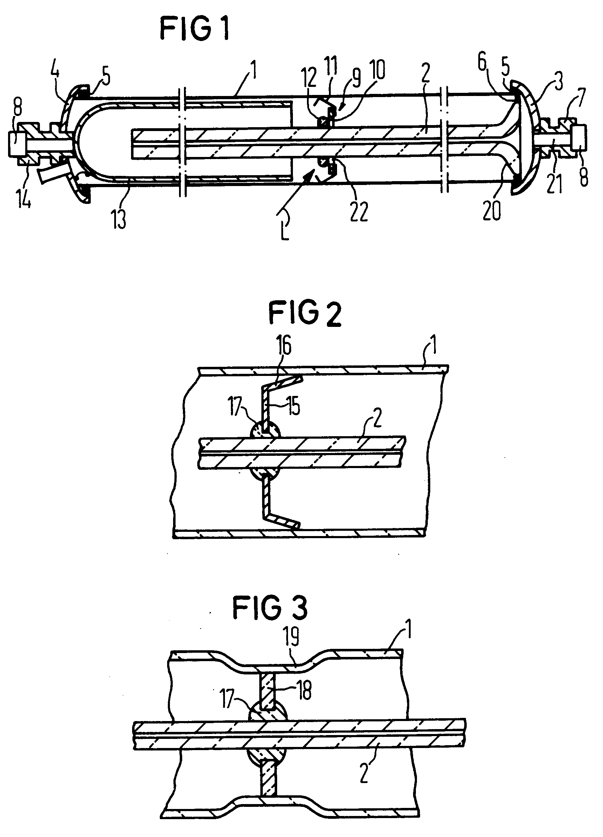

Im Beispiel von Fig. 2 sind eine Scheibe 15 und Federstreifen 16 einstückig miteinander verbunden. Das Lot 17 ist in dieser Darstellung bereits aufgeschmolzen.

Im Beispiel von Fig. 3 ist lediglich ein Ring 18 vorgesehen, welcher durch eine Verjüngung 19 des Gehäuserohres 1 gehalten ist. Das Lot 17 ist in diesem Beispiel ebenfalls bereits aufgeschmolzen und in der endgültigen Lage. Der Ring 18 wird in diesem Beispiel vorteilhaft aus einem im Temperatur-Ausdehnungskoeffizienten an das Gehäuserohr 1 angepaßten Material gefertigt. Er kann aus Metall, Glas oder Keramik bestehen. Geringe Unterschiede im Ausdehnungskoeffizienten werden zwischen Ring und Kapillare durch das Lot 17 aufgefangen. Als Lot wird hierbei vorzugsweise Glaslot eingesetzt. Als Material für die Kapillare eignet sich sowohl Glas als auch Keramik.

Zur Herstellung eines erfindungsgemäßen Lasers werden vorteilhaft die Spiegelhalterungen 7, 14 mit den Endstücken 3, 4, der Kathode 13 und den Lotringen 5, das Gehäuserohr 1 und die Kapillare 2 auf zumindest einen Dorn aufgefädelt und zueinander exakt fluchtend justiert, nachdem die Stütze 9 und der Lotring 12 auf die Kapillare 2 geschoben und an die entsprechende Stelle des Gehäuserohres 1 gebracht wurden. In diesem Zustand werden die Teile in einem einzigen Arbeitsgang im Ofen miteinander verlötet. So ergibt sich ein exakt justierter, spannungsfreier Laser. Dieses Verfahren eignet sich für die gleichzeitige Verlötung von einer Vielzahl von Lasern. Die relativ lange Lötdauer von beispielsweise einer Stunde ergibt daher dennoch eine rationelle Fertigung.

## Patentansprüche

1. Gaslaser mit einer Anode (7) und einer Kathode (13) und einer in ein Gehäuserohr (1) eingebrachten Kapillare (2), wobei das Gehäuse in Kapillarrichtung durch optische Elemente abgeschlossen ist, wobei die Kapillare anodenseitig mit dem Gehäuserohr mechanisch fest verbunden ist und wobei eine Stütze (9) zur Anodenseite hin beabstandet angebracht ist, welche die Kapillare gegen das Gehäuserohr (1) in radialer Richtung fixiert, wobei die Stütze (9) eine Ausnehmung (22) enthält, durch welche die Kapillare verläuft, **dadurch gekennzeichnet**, daß die Stütze (9) mit der Kapillare (2) nicht unmittelbar in Berührung steht, daß die Stütze (9) mit der Kapillare (2) mittels Glaslot (12, 17) verlötet ist und daß diese mittelbare Verbindung mit der Kapillare (2) deren radiale Lage im Gehäuserohr (1) fixiert.

2. Gaslaser nach Anspruch 1, **dadurch gekennzeichnet**, daß die Stütze aus einem federnden Material besteht.

3. Gaslaser nach Anspruch 1, **dadurch gekennzeichnet**, daß die Stütze aus einem Ring und an diesem befestigten Federstreifen zusammengesetzt ist und daß die Federstreifen gegen das Gehäuserohr drücken.

4. Gaslaser nach Anspruch 3, **dadurch gekennzeichnet**, daß der Ring und die Federstreifen einstückig miteinander verbunden sind.

5. Gaslaser nach Anspruch 1, **dadurch gekennzeichnet**, daß die Stütze aus einer Scheibe besteht, deren Temperatur-Ausdehnungskoeffizient an den das Gehäuserohres angepaßt ist, und daß die Stütze durch eine Verjüngung des Gehäuserohres in ihrer Lage fixiert ist.

6. Verfahren zur Herstellung eines Gaslasers nach einem der Ansprüche 1 bis 5, **dadurch gekennzeichnet**, daß mit Ausnahme der Spiegel alle Teile der Laserröhre unter Zwischenlage entsprechender Glaslotringe in die gewünschte gegenseitige Lage gebracht und in einem einzigen Arbeitsgang miteinander verlötet werden und daß dabei die Stütze durch das Gehäuserohr in ihrer endgültigen Lage gehalten wird.

7. Verfahren zur Herstellung eines Gaslasers nach einem der Ansprüche 1 bis 5, **dadurch gekennzeichnet**, daß für die Verlötung der Stütze mit der Kapillare ein Glaslotring vorgesehen wird, daß die übrigen Teile mittels einer bekannten Methode miteinander verbunden werden und daß die Stütze unabhängig davon mittels einer Lichtlötung der Kapillare verlötet wird.

8. Verfahren nach Anspruch 7, **dadurch gekennzeichnet**, daß die Lichtlötung mittels eines Lasers durchgeführt wird.

9. Verfahren nach einem der Ansprüche 7 oder 8, **dadurch gekennzeichnet**, daß zum Verlöten der Stütze mit der Kapillare ein Lot verwendet wird, welches die zur Lichtlötung vorgesehene Lichtstrahlung stärker absorbiert als das Material des Gehäuserohres.

## Claims

1. Gas laser comprising an anode (7) and a cathode (13) and a capillary (2) inserted into a housing tube (1), the housing being sealed in the capillary direction by optical elements, the capillary being connected on the anode side to the housing tube in a mechanically rigid fashion and a support (9) which fixes the capillary against the housing tube (1) in the radial direction being attached at a distance from the anode side, the support (9) containing a cutout (22) through which the capillary extends, characterised in that the support (9) is not directly in contact with the capillary (2), in that the support (9) is soldered to the capillary (2) by means of glass solder (12, 17), and in that this indirect connection to the capillary (2) fixes its radial position in the housing tube (1).

2. Gas laser according to Claim 1, characterised in that the support comprises a resilient material.

3. Gas laser according to Claim 1, characterised in that the support is assembled from a ring and spring strips mounted thereon, and in that the spring strips press against the housing tube.

4. Gas laser according to Claim 3, characterised in that the ring and the spring strips are integrally connected to one another.

5. Gas laser according to Claim 1, characterised in that the support comprises a disc whose coefficient of thermal expansion is matched to that of the housing tube, and in that the support is fixed in its position by a tapering of the housing tube.

6. Method for producing a gas laser according to one of Claims 1 to 5, characterised in that with the exception of the mirrors all the parts of the laser tube are brought into the desired mutual position with the interposition of corresponding glass solder rings and are soldered to one another in a single pass, and in that in this case the support is held in its final position by the housing tube.

7. Method for producing a gas laser according to one of Claims 1 to 5, characterised in that a glass solder ring is provided for soldering the support to the capillary, in that the remaining parts are connected to one another by means of a known method, and in that the support is soldered to the capillary independently thereof by means of light soldering.

8. Method according to Claim 7, characterised in that the light soldering is carried out by means of a laser.

9. Method according to one of Claims 7 or 8, characterised in that the support is soldered to the capillary by using a solder which absorbs the light radiation provided for light soldering more strongly than the material of the housing tube.

## Revendications

1. Laser à gaz comportant une anode (7), une cathode (13) et un tube capillaire (2) monté dans un tube de boîtier (1), du type dans lequel le boîtier est fermé, dans la direction du tube capillaire, par des éléments optiques, le tube capillaire étant, côté anode, relié mécaniquement et fermement au tube de boîtier, alors qu'un support (9) est prévu à distance côté anode, lequel support fixe radialement le tube capillaire par rapport au tube de boîtier (1), et comporte une ouverture (22) qui est traversée par le tube capillaire, caractérisé en ce que le support (9) n'est pas en contact direct avec le tube capillaire (2), en ce que le support (9) est brasé au tube capillaire (2) au moyen de brasure pour le verre (12, 17) et en ce que cette liaison indirecte avec le tube capillaire (2) fixe la position radiale de ce dernier dans le tube de boîtier (1).

2. Laser à gaz selon la revendication 1, caractérisé en ce que le support est constitué d'un matériau élastique.

3. Laser à gaz selon la revendication 1, caractérisé en ce que le support est composé d'un anneau et de bandes élastiques fixées à celui-ci et en ce que les bandes élastiques sont en pression contre le tube de boîtier.

4. Laser à gaz selon la revendication 3, caractérisé en ce que l'anneau et les bandes élastiques sont reliés les uns aux autres pour ne former qu'une pièce.

5. Laser à gaz selon la revendication 1, caractérisé en ce que le support est constitué d'un disque dont le coefficient de dilatation thermique est adapté à celui du tube de boîtier et en ce que la position du support est fixée, par un amincissement du tube de boîtier.

6. Procédé de fabrication d'un laser à gaz selon l'une des revendications 1 à 5, caractérisé en ce que, a l'exception des miroirs, toutes les parties du tube de laser sont amenées, avec interposition d'anneaux de brasure pour le verre correspondants, dans la position relation désirée et sont brasées ensemble en une seule opération, et en ce que, pendant cette opération, le support est maintenu par le tube de boîtier dans sa position définitive.

7. Procédé de fabrication d'un laser à gaz selon l'une des revendications 1 à 5, caractérisé en ce qu'il est prévu, pour le brasage du support avec le tube capillaire, un anneau de brasure pour le verre, en ce que les autres parties sont reliées ensemble au moyen d'une méthode connue et en ce que le support est brasé indépendamment de cela au moyen d'un brasage à l'arc du tube capillaire.

8. Procédé selon la revendication 7, caractérisé en ce que le brasage à l'arc est effectué au moyen d'un laser.

9. Procédé selon l'une des revendications 7 ou 8, caractérisé en ce que, pour braser le support au tube capillaire, on utilise une soudure qui absorbe le rayonnement lumineux prévu pour le brasage lumineux plus fortement que le matériau du tube de boîtier.
